# EUROPÄISCHE PATENTSCHRIFT

(11) **EP 0 689 801 B1**
(45) Veröffentlichungstag und Bekanntmachung des Hinweises auf die Patenterteilung: **29.09.1999**
(21) Anmeldenummer: 95110288.8
(22) Anmeldetag: 30.06.1995
(51) Int. Cl.: A61C 1/08, A61C 1/05

(54) **Ärztliches oder zahnärztliches Behandlungsinstrument mit Antrieb**
Medical or dental motorized instrument
Instrument médical ou dentaire motorisé

(30) Priorität: 01.07.1994 DE 4423222
(43) Veröffentlichungstag der Anmeldung: 03.01.1996
(73) Patentinhaber: KALTENBACH & VOIGT GmbH & Co., 88400 Biberach/Riss (DE)
(72) Erfinder: Mohr, Eugen, D-88444 Ummendorf (DE); Lingenhöle, Bernhard, D-88447 Warthausen (DE)
(74) Vertreter: Schmidt-Evers, Jürgen, Dipl.-Ing.

(56) Entgegenhaltungen:
- EP-A- 0 374 276
- EP-A- 0 455 452
- EP-A- 0 471 916
- EP-A- 0 497 139
- DE-A- 3 114 207
- GB-A- 2 065 829

## Beschreibung

Die Erfindung bezieht sich auf ein ärztliches oder zahnärztliches Behandlungsinstrument nach dem Oberbegriff des Anspruchs 1 oder 3 sowie auf ein Wälzlager nach Anspruch 13.

Die Lager einer Antriebswelle eines ärzflichen oder zahnärzflichen Behandlungsinstruments oder eines Handstücks für ein insbesondere medizinisches Labor sind im Funktionsbetrieb erheblichen Belastungen ausgesetzt, die unter anderem durch die verhältnismäßig hohen Drehzahlen vorgegeben sind, mit denen sowohl elektrisch als auch insbesondere pneumatisch angetriebene Antriebswellen rotieren. Insbesondere im höheren Drehzahlbereich ist der Eintritt von Schmutzstoffen insbesondere in das werkzeugnahe Lager zu verhindern, da anderenfalls der Schmutzstoff zu einem frühzeitigen Verschleiß und Ausfall des Lagers und somit des Behandlungsinstruments führt. Als Schmutzstoffe haben unter anderem insbesondere sowohl Behandlungsflüssigkeiten wie Wasser, Spray oder auch Körperflüssigkeiten wie Blut und Speichel zu gelten. Dabei ist zu berücksichtigen, daß es verschiedene Funktionskriterien gibt, die das Wandern der Schmutzstoffe an der Antriebswelle zum Lager hin begünstigen, z.B. bei einer Reinigung der Behandlungsstelle mit Wasser und/oder Druckluft, z.B. Spray, während des Behandlungsbetriebs, wobei ein solches von der Behandlungsstelle reflektiertes Behandlungsfluid leicht in das Gehäuse des Behandlungsinstruments und weiter zur Lagerstelle gelangen kann.

Das vorliegende Lagerungsproblem stellt sich insbesondere bei solchen Behandlungsinstrumenten, deren Antriebswelle mittels einer Turbine angetrieben wird, deren Turbinenrad auf der Antriebswelle in den meisten Fällen zwischen zwei Wälzlagern sitzt. Bei einem solchen Turbinenantrieb übt das Turbinenrad bei seinem Auslauf nach einer Abschaltung des Druckgases (Luft) einen Saugeffekt aus, der zu einer axialen Saugströmung an der Antriebswelle zu beiden Seiten des Turbinenrades führt. Eine solche Saugströmung forciert die Wanderung von Schmutzstoffen zu den Lagerstellen hin.

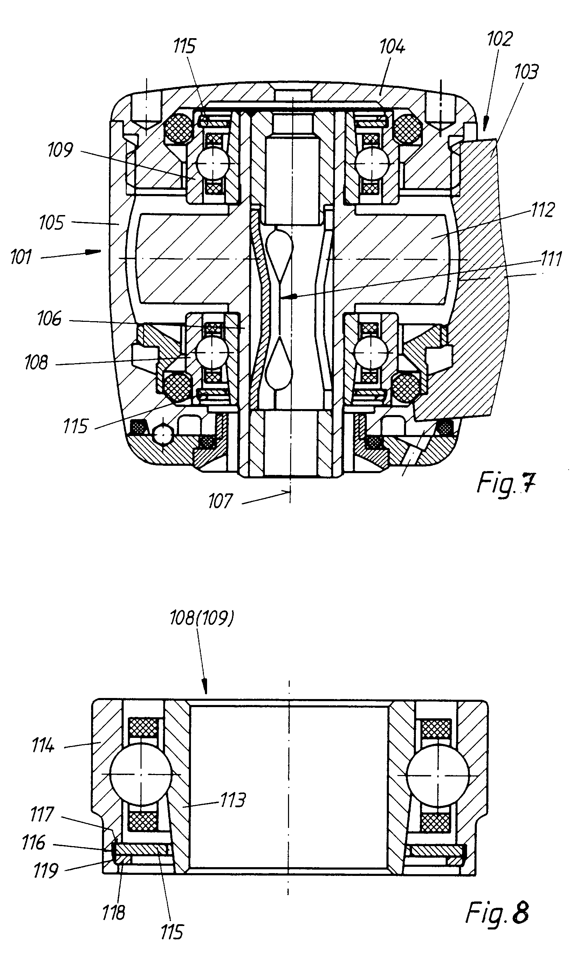

Zwecks Abdichtung der Wälzlager eines vorbeschriebenen Turbinenhandstücks hat man bereits den Wälzlagern eine besondere Dichtungsscheibe zur Abdichtung des Spalts zwischen dem Innen- und Außenring zugeordnet. Eine solche Ausgestaltung ist bei auf dem Markt vertriebenen und bewährten Turbinenhandstücken der Anmelderin vorgesehen. Diese bekannte Ausgestaltung wird im folgenden an Hand von Fig. 7 und 8 einer beigefügten Zeichnung näher beschrieben.

Die Fig. 7 zeigt den Kopf 101 eines sogenannten Winkelhandstücks 102 im axialen Schnitt. Zum Handstück 102 gehört eine in üblicher Weise abgeknickte Griffhülse 103, von der nur der vorderste Teil zu sehen ist. Im oberseitig durch einen Deckel 104, z.B. einem Schraubdeckel, verschlossenen Gehäuse 105 des Kopfes 101 ist eine hohle Antriebswelle 106 um eine sich quer zur Griffhülse 103 erstreckende Drehachse 107 in zwei Wälzlagern 108, 109 frei drehbar gelagert, von denen das werkzeugseitige Wälzlager 108 im Bereich des Bodens des Gehäuses 105 und das werkzeugferne Wälzlager 109 im Deckel 104 angeordnet sind. In die werkzeugseitig den Boden in einem Loch nach außen durchragende Antriebswelle 106 ist ein nicht dargestelltes Werkzeug mit seinem Schaft einschiebbar und durch eine Klemmeinrichtung 111 in der eingeschobenen Stellung klemmbar. Bei der vorliegenden Ausgestaltung ist die Klemmeinrichtung 111 durch mehrere Federzungen in der hohlen Antriebswelle 106 gebildet, die beim Einschieben des Werkzeugschaftes auseinandergebogen werden und radial einwärts gegen den Schaft drücken. Zwischen den Wälzlagern 108, 109 ist ein Turbinenrad 112 auf der Antriebswelle 106 fest angeordnet, auf das ein sich durch die Griffhülse 103 erstreckender Druckluftkanal (nicht dargestellt) gerichtet ist. Für den Drehbetrieb des eingespannten Werkzeugs (nicht dargestellt) kann die Druckluft durch einen ebenfalls nicht dargestellten Schalter eingeschaltet werden.

Beiden Wälzlagern 108, 109 ist jeweils eine zwischen dem Innenring 113 und dem Außenring 114 wirksame Sperr- bzw. Dichtungsscheibe 115 zugeordnet, deren Ausgestaltung und Anordnung aus der Fig. 8 zu entnehmen ist, die ein der beiden einander identischen Wälzlager 108, 109 im vergrößerten Axialschnitt zeigt. Ein Unterschied bei den Wälzlagern 108, 109 besteht lediglich darin, daß die zugehörige Dichtungsscheibe 115 jeweils außenseitig am zugehörigen Wälzlager angeordnet ist, die spiegelbildlich zueinander eingebaut sind.

Die Dichtungsscheibe 115 ist jeweils mit ihrem Außenrand in eine erweiterte Bohrung 116 mit Paßsitz eingesetzt, wobei sie innenseitig an einer Schulter 117 der erweiterten Bohrung 116 anliegt und außenseitig durch einen Federring 118 axial begrenzt ist, der in eine innere Ringnut 119 in der erweiterten Bohrung 116 lösbar eingesetzt ist. Der Innenrand der Dichtungsscheibe 115 umgibt die Mantelfläche des Innenrings 113 mit einem geringem Bewegungsspiel, wodurch die außenseitige Abdichtung des Wälzlagers gebildet ist.

Diese bekannte Ausgestaltung hat sich in der Praxis bewährt, jedoch kann sie noch verbessert werden.

In der EP 05 27 473 A1 ist ein winkelförmiges zahnärztliches Bohr-Handstück beschrieben, bei dem ein im Winkelkopf des Handstücks angeordnetes Antriebsrad mit dem zugehörigen Wälzlager in einer Lagerhülse angeordnet ist, die von oben in das Handstück einsetzbar ist. Zur Abdichtung des Werkzeugantriebs im Handstückkopf ist zwischen der Lagerhülse und einer das Bohrwerkzeug aufnehmenden Antriebswelle eine Labyrinthdichtung auf der werkzeugnahen Seite des Handstückkopfes vorgesehen. Die Labyrinthdichtung weist einen axial äußeren Labyrinthring und einen axial inneren Labyrinthring auf, von denen der äußere auf der Antriebswelle drehfest befestigt ist und radial nach außen absteht, und von denen der innere Labyrinthring von der Lagerhülse radial einwärts absteht und einstückig an der Lagerhülse ausgebildet ist, wobei der äußere Labyrinthring einen koaxial nach innen ragenden hohlzylindrischen Ringabschnitt aufweist, der einen am inneren Labyrinthring angeordneten, nach außen abstehenden hohlzylindrischen Ringabschnitt übergreift. Außerdem ist diese Labyrinthdichtung von einer in die Lagerhülse eingesetzten Schutzhülse umgeben, die den äußeren Labyrinthring mit radialen Abstand überdeckt und im Bereich einer radialen Stufenfläche des äußeren Labyrinthrings eine radiale Öffnung aufweist, durch die hindurch Schmutzteile radial nach außen abschleuderbar sein sollen.

Diese bekannte Ausgestaltung ist kompliziert, vielgliedrig und teuer in der Herstellung.

Der Erfindung liegt die Aufgabe zugrunde, bei einem ärztlichen oder zahnärztlichen Behandlungsinstrument der eingangs angegebenen Art das Eindringen von Verunreinigungen in das Gehäuse oder in das oder die Wälzlager zu verhindern oder zu verringern.

Diese Aufgabe wird durch die Merkmale des Anspruchs 1 oder 3 gelöst.

Die Ausgestaltung nach Anspruch 2 führt zu einer einfachen und für das Wälzlager schonenden Befestigung des Sperrings am Innenring, wobei eine stabile und dichte Befestigung erreicht wird, ohne daß aufgrund Überhitzung ein Verzug am Innenring eintritt, der die Lauffähigkeit des Wälzlagers und dessen Lebensdauer beeinträchtigen würde.

Bei der Ausgestaltung nach Anspruch 9 Zusätzlich eine Labyrinthdichtung vorgesehen. Es ist vorteilhaft, die Labyrinthdichtung so auszubilden, daß für eindringenden Schmutz ein S-förmiger, radial nach innen verlaufender Weg vorgegeben ist, der eine wirksame Barriere gegen das Eindringen von Schmutz darstellt. Ein solcher S-förmiger Labyrinthweg läßt sich durch zwei axial aufeinanderzu vorspringende hohlzylindrische Labyrinthringabschnitte bilden, von denen der am äußeren Labyrinthring angeordnete, nach innen vorspringende Labyrinthringabschnitt einen am inneren Labyrinthring angeordneten, nach außen weisenden Labyrinthringabschnitt mit einem Spalt übergreift. Dabei kann der axial innere Labyrinthring im Kopfgehäuse des Handstücks unlösbar befestigt sein, z.B. durch Einpressen, Kleben oder durch eine einstückige Ausbildung am Kopfgehäuse.

Alle vorbeschriebenen erfindungsgemäßen Ausgestaltungen zeichnen sich durch eine einfache und kostengünstig herstellbare Bauweise aus. Dabei ist es bei allen erfindungsgemäßen Ausgestaltungen möglich, zumindest ein Bauteil der erfindungsgemäßen Ausgestaltungen an seinem Träger vorgefertigt herzustellen oder zu montieren, wodurch eine wesentliche Vereinfachung erreicht wird. Die erfindungsgemäßen Bauteile können an einem Wälzlager komplett vorgefertigt und damit einfach hergestellt und montiert werden.

Die Erfindungen nach Anspruch 1 oder 3 lösen die der Erfindung zugrundeliegende Aufgabe in vorteilhafter Weise.

In den Unteransprüchen sind Merkmale enthalten, die weitere Verbesserungen der Abdichtung und weitere einfache und praktische Ausgestaltungen enthalten.

Die erfindungsgemäßen Ausgestaltungen eignen sich vorzugsweise für ein sogenanntes Turbinen-Handstück, bei dem die Antriebswelle nach der Abschaltung ihres Antriebs nachläuft.

Es ist auch möglich innenseitig vom ersten Sperring einen zweiten Sperring anzuordnen, der insbesondere an dem gegenüberliegenden Außen- oder Innenring des zugehörigen Wälzlagers gehalten ist. Dabei kann der zweite Sperring mit dem Innenring oder der Hülse dichtend zusammenwirken. Es ist auch vorteilhaft, die Anordnung so zu treffen, daß eine vorzugsweise radiale Dichtfläche, mit der der erste Sperring dichtend zusammenwirkt, durch einen Sicherungsring gebildet ist, der den zweiten Sperring auf der zum ersten Sperring gerichteten Seite hin begrenzt.

Da insbesondere bei einem solchen Handstückkopf, der auf seiner dem Werkzeug abgewandten Seite eine Öffnung aufweist, die Gefahr des Eindringens von Schmutz auch auf diese Seite besteht, ist es vorteilhaft, die erfindungsgemäßen Merkmale auch im werkzeugfernen Bereich des Handstücks anzuordnen, insbesondere ein hier vorgesehenes Wälzlager erfindungsgemäß auszubilden und vorzufertigen.

Die Erfindung bezieht sich auch auf ein Wälzlager mit den erfindungsgemäßen Merkmalen, wodurch die bereits angeführten Vorteile ebenfalls erreicht werden.

Nachfolgend werden die Erfindung und weitere durch sie erzielbare Vorteile anhand bevorzugter Ausführungsbeispiele und einer vereinfachten Zeichnung näher erläutert.

Es zeigt:
- Fig. 1: ein erfindungsgemäßes Behandlungsinstrument in Form eines sogenannten Winkelhandstücks in der Seitenansicht;
- Fig. 2: den Kopf des Winkelhandstücks mit Turbinenantrieb im Axialschnitt;
- Fig. 3: ein Wälzlager für den Handstückkopf in vergrößerter Schnittdarstellung;
- Fig. 4: den Kopf im Axialschnitt eines erfindungsgemäßen Behandlungsinstruments in Form eines Winkelhandstücks mit Turbinenantrieb in abgewandelter Ausgestaltung;
- Fig. 5: ein Wälzlager im Kopf des Turbinenhandstücks nach Fig. 4 in vergrößerter Schnittdarstellung;
- Fig. 6: den Kopf im Axialschnitt eines erfindungsgemäßen Behandlungsinstruments in Form eines Winkelhandstücks mit Turbinenantrieb in weiter abgewandelter Ausgestaltung.

Die Hauptteile des allgemein mit 1 bezeichneten Winkelhandstücks sind eine in üblicher Weise abgewinkelt ausgebildete Griffhülse 2, ein an deren vorderen Ende befestigter sogenannter Winkelkopf 3, eine darin angeordnete Antriebsturbine 4 mit einem Turbinenrad 5 und eine Antriebswelle 6, die im Gehäuse 7 des Winkelkopfes 3 um eine sich quer zur Griffhülse 2 erstreckende Drehachse 8 durch die Antriebsturbine 4 drehbar gelagert ist. In der Antriebswelle 6 ist eine Spannhülse 6a befestigt, in die ein nicht dargestelltes Behandlungswerkzeug von der Werkzeugseite des Winkelkopfes 3 her einsteckbar und spannbar ist.

Bei der vorliegenden Ausgestaltung ist das Turbinenhandstück 1 nur ein Teil, nämlich der vordere Teil, eines Behandlungsinstruments mit einem sogenannten Versorgungsteil (nicht dargestellt), das mit dem hinteren Ende des Turbinenhandstücks 1 bzw. der Griffhülse 2 lösbar verbindbar ist, vorzugsweise durch eine an sich bekannte Steckdreh-Kupplung 9. Längs durch die Griffhülse 2 erstrecken sich Versorgungsleitungen (nicht dargestellt) wie eine Druckluftleitung, die sich zur Antriebsturbine 4 erstreckt, und weitere Leitungen für Licht, Luft und Kühl- bzw. Behandlungsflüssigkeit oder Spray, die im vorderen Bereich der Griffhülse 2 in Richtung auf die Behandlungsstelle ausmünden. Wenn eine Steck/Drehkupplung 9 vorgesehen ist, erstrecken sich die vorgenannten Leitungen durch diese hindurch, und sie sind im Versorgungsteil weitergeführt und an eine nicht dargestellte Versorgungseinrichtung angeschlossen.

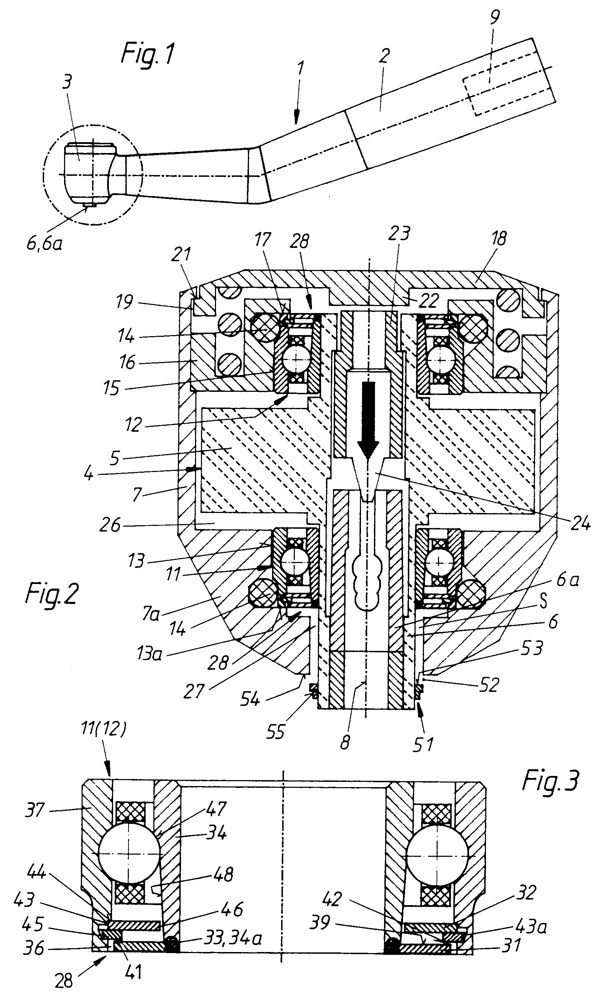

Wie aus Fig. 2 zu entnehmen ist, sind zur Lagerung der Antriebswelle 6 zwei Wälzlager 11, 12 vorgesehen, die identisch zueinander ausgebildet sind, jedoch spiegelbildlich zueinander angeordnet sind. Das werkzeugseitige Wälzlager 11 ist in einer innenseitigen Lagerbohrung 13 im Bodenteil 7a des Gehäuses 7 eingesetzt und am Umfang durch einen Dichtungsring 14 abgedichtet, wobei es mit seiner werkzeugseitigen Stirnseite an einer Innenschulter 13a der Lagerbohrung 13 anliegt.

Das werkzeugferne Wälzlager 12 sitzt in einer Lagerbohrung 15 einer Lagerscheibe 16, die von der werkzeugfernen Seite her in das Gehäuse 7 eingesetzt und in nicht dargestellter Weise fixiert ist. Das werkzeugferne Wälzlager 12 liegt mit seiner werkzeugfernen Stirnfläche an einer Innenschulter 17 der Lagerscheibe 16 an und ist darin durch einen Dichtungsring 14 abgedichtet, der an seiner Außenmantelfläche anliegt. Das Gehäuse 7 ist auf seiner werkzeugfernen Seite durch einen Deckel 18 verschlossen, der in einer zwischen ihm und dem Gehäuse 7 wirksamen Axialführung 19 axial verschiebbar und durch eine zwischen ihm und dem Gehäuse 7 oder der Lagerscheibe 16 eingespannte Druckfeder 20 in seine werkzeugferne Endstellung gegen einen Bewegungsanschlag 21 am Gehäuse 7 vorgespannt ist. In seinem Zentrum weist der Deckel 18 innenseitig ein Druckstück 22 auf, das beim Eindrücken des Deckels 18 durch einen Finger der Bedienungshand einen in der Antriebswelle 6 axial verschiebbar gelagerten Stößel 23 nach innen verschiebt, der mit einem an seinem werkzeugseitigen Ende angeordneten Lösungskeil 24 ein nicht dargestelltes Werkzeug zu lösen vermag, das von der Werkzeugseite her in die in der Antriebswelle 6 eingesetzten Spannhülse 6a eingeschoben ist.

Zwischen den Wälzlagern 11, 12 ist das Turbinenrad 5 auf der Antriebswelle 6 angeordnet und in einem Freiraum 26 des Gehäuses 7 mittels des vorbeschriebenen Druckluftantriebs drehbar. Bei der vorliegenden Ausgestaltung ist das Turbinenrad 5 einstückig mit der Antriebswelle 6 ausgebildet. Letztere erstreckt sich durch eine gegenüber der Lagerbohrung 13 verjüngte Bohrung 27 im Bodenteil 7a nach außen, wobei sie das Bodenteil 7a nach außen überragt oder auch mit der Werkzeugseite des Bodenteils 7a abschließen kann.

Wie aus Fig. 2 und 3 zu entnehmen ist, ist das werkzeugnahe Wälzlager 11 an seiner werkzeugnahen Seite und das werkzeugferne Wälzlager 12 auf seiner werkzeugfernen Seite jeweils durch eine sonst identische Axialdichtung 28 abgedichtet, die vorzugsweise eine Labyrinthdichtung bildet.

Die Dichtung 28 umfaßt jeweils zwei axial hintereinander angeordnete scheibenförmige Sperringe oder Dichtungsringe 31, 32, die bei der vorliegenden Ausgestaltung jeweils durch eine ebene Ringscheibe gebildet sind. Der äußere Dichtungsring 31 ist durch Laser-Punktschweißen 33 am Innenring 34 befestigt, wobei er vorzugsweise an der äußeren Stirnfläche 34a des Innenrings 34 flach anliegt. Der Außenrand des äußeren Dichtungsrings 31 wirkt unter Bildung einer Dichtungsfuge 36 dichtend mit dem Außenring 37 zusammen, wobei seine zylindrische Umfangsfläche unter Bildung eines axialen Dichtungsspaltes geringen Bewegungsspiels mit der zylindrischen Innenfläche des Außenrings 37 und/oder mit seiner inneren Stirnfläche 39 bei Bildung einer Dichtungsfuge 41 mit einer nach außen weisenden etwa radialen Dichtungsfläche 42 des Außenrings 37 zusammenwirken kann. Bei der vorliegenden Ausgestaltung ist die radiale Dichtungsfläche 42 eine vom Außenring 37 nach innen vorspringende Schulterfläche, die einen Abstand von der werkzeugseitigen Stirnfläche des Außenrings 37 aufweist, so daß der äußere Dichtungsring 31 im Außenring 37 versenkt angeordnet ist und werkzeugseitig vorzugsweise mit dessen Stirnfläche abschließt.

Vorzugsweise ist der Dichtungsring 31 Teil einer Labyrinthdichtung mit dem zweiten, vorzugsweise innenseitig vom Dichtungsring 31 angeordneten zweiten Dichtungsring 32, der in einer Bohrungserweiterung der Innenumfangsnut 43 sitzt und innenseitig an einer Schulterfläche 44 anliegt und außenseitig durch einen lösbaren Sicherungsring 45 begrenzt ist, der in einer Innennut 43a sitzt. Wie bereits der äußere Dichtungsring 31 ist auch der innere Dichtungsring 32 durch eine flache Ringscheibe gebildet. Außerdem ist bei der vorliegenden Ausgestaltung die radiale mit dem äußeren Dichtungsring 31 zusammenwirkende Dichtungsfläche 42 durch die Außenseite des flachen Sicherungsrings 45 gebildet, so daß es keiner besonderen Schulterfläche bedarf. Zur Aufnahme des inneren Sperrings oder Dichtungsrings 32 und des Sicherungsringes 45 ist eine gemeinsame, abgestufte Innenumfangsnut vorgesehen. Der freie Innenquerschnitt des inneren Sperrings oder Dichtungsrings 32 ist an den Außenquerschnitt des Innenrings 34 so angepaßt, daß zwischen den beiden etwa zylindrischen Dichtungsflächen eine Dichtungsfuge 46 mit geringem Bewegungsspiel besteht.

Bei der vorliegenden Ausgestaltung sind die Wälzlager 11, 12 jeweils durch ein Kugelrillenlager gebildet, wobei die Kugelrille 47 im Innenring 34 außenseitig offen ist. Bei der vorliegenden Ausgestaltung schließt sich die Kugelrille 47 an eine zu ihr hin divergente Konusfläche 48 geringer Neigung an, die die Außenmantelfläche des Innenrings 34 und auch die Dichtfläche für den inneren Dichtungsring 32 bildet. Vorzugsweise ist die Innenumfangsfläche des inneren Sperrings oder Dichtungsrings 32 an die Neigung der Konusfläche 48 angepaßt.

Die vorbeschriebene Anordnung des äußeren Dichtungsrings 31 verhindert auch eine unbeabsichtigte Demontage des zugehörigen Wälzlagers 11, 12. Es braucht deshalb bei einer Demontage der Antriebswelle 6 nicht darauf geachtet zu werden, daß ein Auseinanderfallen des Wälzlagers 11, 12 zu verhindern ist.

Das werkzeugferne Wälzlager 12 ist unter Berücksichtigung seiner spiegelbildlichen Anordnung entsprechend angeordnet und ausgebildet, so daß es einer separaten Beschreibung nicht bedarf.

Die werkzeugseitige Abdichtung des Wälzlagers 11 läßt sich auch dadurch bewirken oder zusätzlich zur vorbeschriebenen Dichtung verbessern, daß vor dem Wälzlager 11 oder hinter dem Wälzlager 12 ein Schleuderring 51 oder eine Schleuderscheibe auf der Antriebswelle 6 fest angeordnet ist, der vorzugsweise mit einer Fläche des Gehäuses 7 oder einem Anbauteil desselben bei Bildung einer Dichtungsfuge 52 geringen Bewegungsspiels zusammenwirkt. Bei der vorliegenden Ausgestaltung ist die werkzeugferne Stirnfläche des Schleuderrings 51 eine erste Dichtfläche 53, die mit einer zweiten Dichtfläche 54 des Gehäuses 7 zusammenwirkt, die vorzugsweise die werkzeugnahe Außenfläche des Gehäuses 7 ist. Für Schmutzstoffe, die axial an der Mantelfläche der Antriebswelle 6 in Richtung auf das werkzeugnahe Wälzlager 11 kriechen, stellt der Schleuderring 51 eine beträchtliche Hürde dar, weil die Schmutzstoffe radial abgelenkt werden und aufgrund der dabei stattfindenden Fliehkrafterhöhung abgeschleudert werden. Solche insbesondere flüssigen Stoffe, die trotz dieser Schleuderwirkung an dem Schleuderring 51 haften und weiter in Richtung auf das Wälzlager 11 kriechen sollten, erwartet an der werkzeugfernen Seiten des Schleuderrings 51 eine kaum zu überwindende Hürde, weil die Schmutzstoffe gegen die radial nach außen wirksame Fliehkraft am Schleuderring 51 radial nach innen kriechen müßten, was kaum möglich ist. Außerdem wird die nach innen gerichtete weitere Kriechbewegung durch die Dichtungsfuge 52 verhindert. Es ist von Vorteil, den Schleuderring 51 an seiner werkzeugnahen Seite mit einer Umfangsnut 55 zu versehen, so daß er eine winkelförmige Querschnittsform erhält. Hierdurch wird eine weitere Hürde geschaffen, die das Kriechen von Schmutzstoffen weiter behindert.

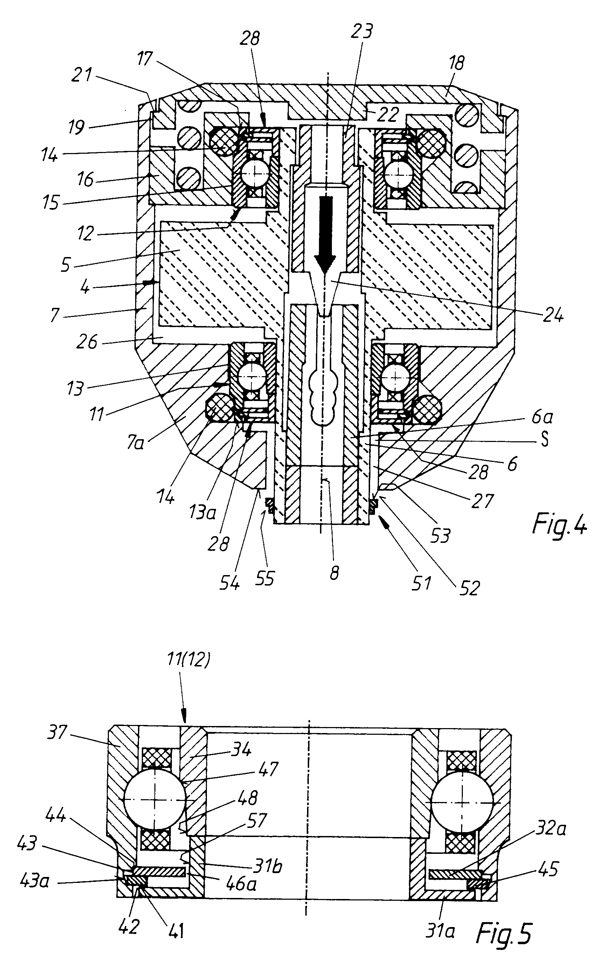

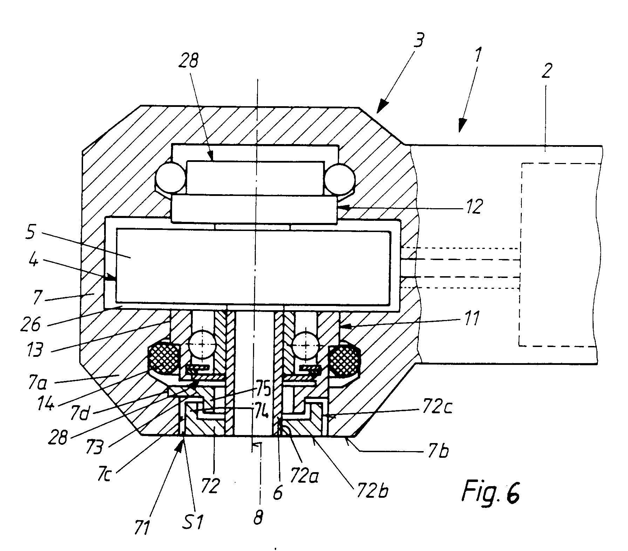

Das Ausführungsbeispiel gemäß Fig. 4 und 5, bei dem gleiche oder vergleichbare Teile mit gleichen Bezugszeichen versehen sind, unterscheidet sich vom vorbeschriebenen Ausführungsbeispiel dadurch, daß der dem Dichtungsring 31 entsprechende Dichtungsring 31a nicht am Innenring 34 befestigt ist, sondern fest auf der Antriebswelle 6 sitzt, wobei er vorzugsweise an der ihm zugewandten Seite des Innenrings 34 anliegt. Wenn der Dichtungsring 31a werkzeugseitig mit der Stirnfläche des Außenrings 37 abschließt, ist der Innenring 34 entsprechend der axialen Abmessung des Dichtungsrings 31a kürzer bemessen als der Außenring 37. Bei der vorliegenden Ausgestaltung ist der Dichtungsring 31a insbesondere am werkzeugnahen Ende einer kurzen Hülse 31b vorzugsweise einstückig angeordnet, die einen festen Sitz auf der Antriebswelle 6 gewährleistet und mit ihrem werkzeugfernen Ende am Innenring 34 anliegt. Letzterer ist entsprechend kürzer zu bemessen.

Wenn der Dichtungsring 31a mit einer nach innen weisenden, vorzugsweise hohlzylindrischen Hülse 31b versehen ist, ist es von Vorteil, den inneren Dichtungsring 32a mit der Außenmantelfläche 57 der Hülse 31b an einer Dichtungsfuge 46a geringen Bewegungsspiels dichtend zusammenwirken zu lassen, wobei hier zylindrische Dichtungsflächen verwirklicht werden können.

Der äußere Dichtungsring 31 besteht bei einer Befestigung durch Schweißen aus einem Stahl, der sich mit dem Innenring 34 verschweißen läßt, oder er kann bei einer anderen der angegebenen Befestigungsarten auch aus Kunststoff bestehen. Der innere Dichtungsring 32 und/oder der äußere Dichtungsring 31a mit der Hülse 31b können ebenfalls aus Stahl oder aus Kunststoff bestehen.

Bei der Ausgestaltung gemäß Fig. 6, bei der gleiche oder vergleichbare Teile mit ebenfalls gleichen Bezugszeichen versehen sind, ist zwischen der werkzeugseitigen Wandung 7a des Gehäuses 7 und der Antriebswelle 6 eine Labyrinthdichtung 71 angeordnet, die eine wirksame Barriere gegen insbesondere feste Schmutzteile aber auch nicht festen Schmutz, wie Flüssigkeiten, bildet. Die Labyrinthdichtung 71 weist zwei Labyrinthringe 72, 73 auf, die einander axial und vorzugsweise auch radial übergreifen. Die Labyrinthringe 72, 73 bestehen aus Kunststoff oder vorzugsweise aus Metall, insbesondere Stahl. Der axial äußere Labyrinthring 72 ist mit einer passenden Bohrung 72a fest auf der Antriebswelle 6 angeordnet und z.B. durch Aufpressen, Kleben oder Schweißen befestigt. Dabei ist es vorteilhaft, diesen Labyrinthring 72 so auf der Antriebswelle 6 anzuordnen, daß seine äußere Seitenfläche 72a mit der werkzeugseitigen Seitenfläche 7b des Gehäuses 7 etwa abschließt. Im Bereich des axial äußeren Labyrinthrings 72 ist die in der Gehäusewand 7a vorhandene Bohrung 7c größer als üblich und hier mit einem solchen radialen Abstand von der Antriebswelle 6 bemessen, daß zwischen der zylindrischen Umfangsfläche 72c des Labyrinthrings 72 und der zylindrischen Wandung der Bohrung 7c ein geringer Spalt besteht.

Der axial äußere Labyrinthring 72 bildet mit seiner äußeren Seitenfläche 72b eine Schleuderfläche, an der bei Rotation der Antriebswelle mit Werkzeug Verunreinigungen radial abgeschleudert werden. Er ist somit auch ein Schleuderring.

Der axial innere Labyrinthring 73 ist undrehbar an der Gehäusewand 7a befestigt, z.B. einstückig angeordnet, oder in ein entsprechendes Aufnahmeloch eingesetzt und darin befestigt, z.B. durch Pressen, Kleben oder Schweißen. Der Labyrinthring 73 kann in der Bohrung 7c eingesetzt sein. Bei der vorliegenden Ausgestaltung ist eine stufenförmige Bohrungserweiterung 7d vorgesehen, in der der Labyrinthring 73 mit seiner Außenumfangsfläche fest eingesetzt ist. Zwischen den Labyrinthringen 72, 73 ist ebenfalls ein geringer radialer Spalt S1 vorgesehen, durch den das Labyrinth gebildet ist. Vorzugsweise weisen der axial äußere Labyrinthring 72 an seinem Außenumfang und der axial innere Labyrinthring 73 an seinem Innenumfang jeweils einen hülsenförmigen, vorzugsweise hohlzylindrischen axialen Ringansatz 74, 75 auf, die aufeinanderzu axial abstehen und überlappen, wobei der Ringansatz 74 des axial vorderen Labyrinthrings 72 den Ringansatz 75 des axial inneren Labyrinthrings 73 mit einem den Spalt S1 bildenden radialen Abstand übergreift. Dabei befindet sich zwischen dem Ringansatz 75 und dem Labyrinthring 72 ebenfalls der sich hier radial erstreckende Spalt S1, der sich auch zwischen dem axial inneren Labyrinthring 73 und der Antriebswelle 6 nach innen fortsetzt und hier ggf. etwas größer bemessen ist. Hierdurch ist ein S-förmiger, axial und radial nach innen verlaufender Labyrinthweg geschaffen.

Die vorbeschriebene Labyrinthdichtung 71 oder eine andere Labyrinthdichtung eignet sich vorzüglich in Kombination mit einer axialen Abdichtung oder Abdeckung des zugehörigen Wälzlagers 11, wie es die Fig. 6 zeigt.

In Fig. 6 rechte Hälfte ist eine abgewandelte Ausgestaltung bzw. Anordnung des axial inneren Labyrinthrings 73 dargestellt. Bei dieser Abwandlung ist der Labyrinthring 73 einstückig am Außenring des vorhandenen Wälzlagers 11 angeordnet, hier durch eine axial und entsprechend abgewinkelt verlaufende Verlängerung des Außenrings. Bei dieser Ausgestaltung läßt sich der Labyrinthring 73 am Wälzlager 11 vorfertigen und mit diesem montieren.

Wie bereits bei den vorbeschriebenen Ausführungsbeispielen ist es auch bei dieser Ausgestaltung vorteilhaft, auch das werkzeugferne Lager 12 mit einer entsprechenden Abdichtung oder Abdeckung 28 spiegelbildlich zu versehen, um auch auf dieser Seite das Eindringen von Schmutz zu verhindern oder zu verringern. Dies gilt insbesondere für solche Gehäuse 7, die auf ihrer werkzeugfernen Seite eine verschließbare oder ständig offene Öffnung aufweisen.

Auch bei der Ausgestaltung nach Fig. 6 kann - wie bereits gemäß Fig. 2 - die Antriebswelle 6 vorzugsweise mit dem Turbinenrad 5 und den Wälzlagern 11, 12 von der werkzeugfernen Seite ein- und ausbaubar sein.

Die Sperringe 31, 31a können aus Kunststoff oder vorzugsweise aus Metall oder Stahl bestehen, wobei sie mit ihren Umfangsabschnitten dichtend am zugehörigen Anlageteil anliegen und somit eine Dichtscheibe bilden können oder sie bilden Sperrscheiben, deren sperrende Umfangsabschnitte einen geringen axialen oder radialen Abstand (Spiel) vom benachbarten Bauteil aufweisen und somit einen Spalt begrenzen, wodurch eine Abdeckung oder ein Labyrinthspalt geschaffen ist.

Anhand der vorliegenden Zeichnungen sind die vorbeschriebenen erfindungsgemäßen Maßnahmen anhand eines Behandlungsinstruments mit einer Turbine als Antrieb für die Antriebswelle beschrieben. Im Rahmen der Erfindung ist es jedoch auch möglich und vorteilhaft, die Maßnahmen zur Verhinderung bzw. Reduzierung des Eindringens von Verschmutzungen in das Gehäuse 7 bzw. in die Lagerstellen bei einem Behandlungsinstrument ohne einen Turbinenantrieb im Kopfbereich, z.B. einem Behandlungsinstrument mit einer im Kopfbereich verlaufenden mechanischen Antriebsverbindung, anzuwenden. Die angestrebten Vorteile werden mit den erfindungsgemäßen Merkmalen auch bei solchen Behandlungsinstrumenten erreicht.

Im weiteren ist hevorzuheben, daß diverse Teile der erfindungsgemäßen Ausgestaltungen gleiche oder ähnliche Funktionen haben bzw. einander funktionell kombinieren oder ergänzen. Z.B. bilden der Dichtungsring 31 bzw. 31a jeweils einen Sperr- oder Schleuderring, weil sie mittelbar oder unmittelbar mit der Antriebswelle 6 verbunden sind und somit an der Rotation teilnehmen. Es ist deshalb von Vorteil, die radiale Abmessung der Dichtungsringe 31 bzw. 31a möglichst groß zu bemessen und in Form von Scheiben auszubilden, so daß eine beträchtliche Schleuderwirkung erreicht wird.

Im weiteren erfüllt der Schleuderring 51 dann eine Dichtungsfunktion im Sinne eines Dichtungsringes bzw. einer Dichtungsscheibe, wenn er mit dem Gehäuse 7 oder einem Anbauteil desselben dichtend zusammenwirkt, d.h. Dichtungsflächen bildet. Somit erfüllen auch die Dichtungsringe 31 eine Schleuderfunktion.

Darüberhinaus ist hervorzuheben, daß sowohl die Dichtungsringe 31, 31a, 32 und/oder der oder die Schleuderringe 51 eine Labyrinthdichtung bilden, die ebenfalls zur vorliegenden Problemlösung beiträgt.

## Patentansprüche

1. Ärztliches oder zahnärztliches Behandlungsinstrument mit einem geraden oder winkelförmigen Handstück (1) und mit einer Antriebswelle (6) für ein Werkzeug, die in einem vorderen Gehäuse (7) des Behandlungsinstruments um ihre Mittelachse drehbar in wenigstens einem werkzeugseitigem Wälzlager (11, 12) gelagert und durch einen Antrieb oder eine Turbine antreibbar ist, wobei die Antriebswelle (6) die zugehörige Wand (7a) des Gehäuses (7) in einem Loch (7c, 27) durchsetzt, wobei das Wälzlager (11, 12) werkzeugseitig einen zwischen seinem Außenring (37) und seinem Innenring (34) wirksamen Sperring (31) aufweist, der mit seiner dem Innenring (34) zugewandten Fläche am Innenring (34) anliegt und daran unlösbar befestigt ist,
**dadurch gekennzeichnet**,
daß von den einander benachbarten Rändern des Innenrings (34) und des Außenrings (37) der werkzeugseitige Rand des Innenrings (34) bezüglich des Randes des Außenringes (37) axial zurückversetzt angeordnet ist,
daß der Außenring (37) eine axial zurückversetzte radiale Innenschulterfläche (42) aufweist und daß der Sperring (31) im Außenring (37) versenkt angeordnet ist und an der axialen, werkzeugseitigen Stirnfläche (34a) des Innenrings (34) anliegt.

2. Ärztliches oder zahnärztliches Behandlungsinstrument nach Anspruch 1 oder 2,
**dadurch gekennzeichnet**,
daß der Sperring (31) durch Kleben oder Schweißen oder Laserschweißen oder Laser-Punkt-Schweißen am Innenring (34) befestigt ist.

3. Ärztliches oder zahnärztliches Behandlungsinstrument mit einem geraden oder winkelförmigen Handstück (1) und mit einer Antriebswelle (6) für ein Werkzeug, die in einem vorderen Gehäuse (7) des Behandlungsinstruments um ihre Mittelachse drehbar wenigstens einem werkzeugseitigem Wälzlager (11, 12) gelagert und durch einen Antrieb oder eine Turbine antreibbar ist, wobei die Antriebswelle (6) die zugehörige Wand (7a) des Gehäuses (7) in einem Loch (7c, 27) durchsetzt, wobei das Wälzlager (11, 12) werkzeugseitig einen zwischen seinem Außenring (37) und seinem Innenring (34) wirksamen Sperring (31a) aufweist, der mit seiner dem Innenring (34) zugewandten Fläche am Innenring (34) anliegt und daran lösbar befestigt ist,
**dadurch gekennzeichnet**,
daß der Sperring (31a) in Form einer radialen Scheibe an einer Hülse (31b) angeordnet ist, die auf der Antriebswelle (6) drehfest sitzt,
daß die Hülse (31b) an der ihr zugewandten axialen Stirnfläche des Innenrings (34) anliegt,
daß der Außenring (37) eine axial zurückversetzte radiale Innenschulterfläche (42) aufweist und daß der Sperring (31a) im Außenring (37) versenkt angeordnet ist.

4. Ärztliches oder zahnärztliches Behandlungsinstrument nach einem der vorherigen Ansprüche,
**dadurch gekennzeichent**,
daß der Sperring (31) durch eine ebene Ringscheibe gebildet ist.

5. Ärztliches oder zahnärztliches Behandlungsinstrument nach einem der vorherigen Ansprüche,
**dadurch gekennzeichnet**,
daß die Innenschulterfläche (42) durch einen lösbaren Sicherungsring (45) gebildet ist, der in einer Innennut (43a) sitzt und daß innenseitig vom Sicherungsring (45) ein zweiter Sperring (32) in einer Innenumfangsnut angeordnet ist.

6. Ärztliches oder zahnärztliches Behandlungsinstrument nach einem der vorherigen Ansprüche,
**dadurch gekennzeichnet**,
daß der innere Sperring (32) oder der äußere Sperring (31) gegebenenfalls mit Hülse (31b) aus Stahl oder Kunststoff besteht bzw. bestehen.

7. Ärztliches oder zahnärztliches Behandlungsinstrument nach einem der vorherigen Ansprüche,
**dadurch gekennzeichnet**,
daß der Sperring (31) mit der Innenschulterfläche (42) dichtend zusammenwirkt.

8. Ärztliches oder zahnärztliches Behandlungsinstrument nach einem der vorherigen Ansprüche,
**dadurch gekennzeichnet**,
daß in einem zur werkzeugfernen Seite hin gerichteten Abstand vom ersten Wälzlager (11) ein zweites Wälzlager (12) für die Antriebswellen (6) vorgesehen ist, das bezüglich einer sich rechtwinklig zur Antriebswelle (6) erstreckenden Mittelachse spiegelsymmetrisch ausgebildet ist.

9. Ärztliches oder zahnärztliches Behandlungsinstrument nach einem der vorherigen Ansprüche,
**dadurch gekennzeichnet**,
daß zwischen der Wand (7a) des Gehäuses (7) und der Antriebswelle (6) eine Labyrinthdichtung (71) angeordnet ist.

10. Ärztliches oder zahnärztliches Behandlungsinstrument nach Anspruch 9,
**dadurch gekennzeichnet**,
daß die Labyrinthdichtung (71) zwei Labyrinthscheiben oder -ringe (72, 73) aufweist, von denen der eine Labyrinthring (72) auf der Antriebswelle (6) befestigt ist.

11. Ärztliches oder zahnärztliches Behandlungsinstrument nach Anspruch 10,
**dadurch gekennzeichnet**,
daß die Labyrinthringe (72, 73) sich radial überlappen und mit aufeinanderzu abstehenden axialen Ringansätzen (74, 75) auch axial überlappen und zwischen sich einen radialen oder vorzugsweise S-förmigen Spalt (S1) begrenzen.

12. Ärztliches oder zahnärztliches Behandlungsinstrument nach Anspruch 10 oder 11,
**dadurch gekennzeichnet**,
daß der andere Labyrinthring (73) einstückig am Außenring des Wälzlagers (11) angeordnet ist.

13. Wälzlager (11, 12) für ein Behandlungsinstrument nach dem Oberbegriff des Anspruchs 1,
**dadurch gekennzeichnet**,
daß es nach dem Kennzeichen des Anspruchs 1 oder auch eines weiteren der vorherigen Ansprüche ausgebildet ist.

## Claims

1. Medical or dental treatment instrument having a straight or angle-shaped handpiece (1) and having a drive shaft (6) for a tool, which drive shaft is mounted in a forward housing (7) of the treatment instrument rotatable around its middle axis in at least one tool-side roller bearing (11, 12), and is drivable by means of a drive or a turbine, whereby the drive shaft (6) penetrates the associated wall (7a) of the housing (7) in a hole (7c, 27), whereby the roller bearing (11, 12) on the tool side has a blocking ring (31) effective between its outer ring (37) and its inner ring (34), which blocking ring bears against the inner ring (34) with its surface towards the inner ring (34) and is non-releasably attached thereto,
characterised in that,
of the edges of the inner ring (34) and of the outer ring (37) neighbouring one another the tool-side edge of the inner ring (34) is arranged, with regard to the edge of the outer ring (37), axially offset to the rear,
in that the outer ring (37) has an axially rearwardly offset radial inner shoulder surface (42), and in that the blocking ring (31) is arranged countersunk into the outer ring (37) and bears against the axial, tool-side end surface (34a) of the inner ring (34).

2. Medical or dental treatment instrument according to claim 1 or 2,
characterised in that,
the blocking ring (31) is attached to the inner ring (34) by gluing or welding or laser welding or laser spot-welding.

3. Medical or dental treatment instrument having a straight or angle-shaped handpiece (1) and having a drive shaft (6) for a tool, which drive shaft is mounted in a forward housing (7) of the treatment instrument rotatable around its middle axis in at least one tool-side roller bearing (11, 12), and is drivable by means of a drive or a turbine, whereby the drive shaft (6) penetrates the associated wall (7a) of the housing (7) in a hole (7c, 27), whereby the roller bearing (11, 12) on the tool side has a blocking ring (31a) effective between its outer ring (37) and its inner ring (34), which blocking ring bears against the inner ring (34) with its surface towards the inner ring (34) and is releasably attached thereto,
characterised in that,
the blocking ring (31) in the form of a radial disk is arranged on a sleeve (31b) which sits on the drive shaft (6) fixed for rotation therewith,
in that the sleeve (31b) bears against the axial end surface of the inner ring (34) towards it,
in that the outer ring (37) has an axially rearwardly offset radial inner shoulder surface (42), and in that the blocking ring (31a) is arranged countersunk into the outer ring (32).

4. Medical or dental treatment instrument according to any preceding claim,
characterised in that,
the blocking ring (31) is formed by means of a flat annular disk.

5. Medical or dental treatment instrument according to any preceding claim,
characterised in that,
the inner shoulder surface (42) is formed by means of a releasable securing ring (45) which sits in an inner groove (43a), and in that inwardly of the securing ring (45) a second blocking ring (32) is arranged in an inner peripheral groove.

6. Medical or dental treatment instrument according to any preceding claim,
characterised in that,
the inner blocking ring (32) or the outer blocking ring (31), if appropriate with sleeve (31b), consists or consist of steel or plastics.

7. Medical or dental treatment instrument according to any preceding claim,
characterised in that,
the blocking ring (31) cooperates in a sealing manner with the inner shoulder surface (42).

8. Medical or dental treatment instrument according to any preceding claim,
characterised in that,
at a spacing, directed towards the side away from the tool, from the first roller bearing (11) there is provided a second roller bearing (12) for the drive shaft (6), which with regard to a middle axis extending at right angles to the drive shaft (6) is formed mirror symmetrically.

9. Medical or dental treatment instrument according to any preceding claim,
characterised in that,
there is arranged between the wall (7a) of the housing (7) and the drive shaft (6) a labyrinth seal (71).

10. Medical or dental treatment instrument according to claim 9,
characterised in that,
the labyrinth seal (71) has two labyrinth disks or rings (72, 73) of which the one labyrinth ring (72) is attached to the drive shaft (6).

11. Medical or dental treatment instrument according to claim 10,
characterised in that,
the labyrinth rings (72, 73) overlap radially and also overlap axially with axial ring projections (74, 75) standing up towards one another, and between them bound a radial or preferably S-shaped gap (S1).

12. Medical or dental treatment instrument according to claim 10 or 11,
characterised in that,
the other labyrinth ring (73) is arranged in one piece on the outer ring of the roller bearing (11).

13. Roller bearing (11, 12) for a treatment instrument according to the preamble of claim 1,
characterised in that,
that it is formed in accordance with the characterising feature of claim 1 or of any other of the preceding claims.

## Revendications

1. Instrument médical ou dentaire comprenant une pièce à main (1), droite ou coudée ainsi qu'un arbre d'entraînement (6) pour un outil, qui est monté tournant autour de son axe médian dans au moins un roulement (11, 12) côté outil, dans un corps (7) antérieur de l'instrument et est entraîné par un moteur ou une turbine, l'arbre d'entraînement (6) traversant la paroi (7a) correspondante du corps (7) par un trou (7c, 27), le roulement (11, 12), côté outil, comportant une bague de retenue (31) qui agit entre sa bague extérieure (37) et sa bague intérieure (34), est en contact avec la bague intérieure (34) par sa surface tournée vers ladite bague intérieure (34) et est fixée de manière non démontable à celle-ci, caractérisé par le fait que parmi les bords voisins l'un de l'autre de la bague intérieure (34) et de la bague extérieure (37), le bord côté outil de la bague intérieure (34) est disposé en retrait dans la direction axiale par rapport au bord de la bague extérieure (37), par le fait que la bague extérieure (37) présente une surface d'épaulement intérieure (42) radiale en retrait dans la direction axiale et par le fait que la bague de retenue (31) est montée encastrée dans la bague extérieure (37) et est en contact avec la surface frontale (34a) axiale, côté outil, de la bague intérieure (34).

2. Instrument médical ou dentaire selon la revendication 1, caractérisé par le fait que la bague de retenue (31) est fixée a la bague intérieure (34) par collage, par soudage, par soudage laser ou par soudage laser par points.

3. Instrument médical ou dentaire comprenant une pièce à main (1), droite ou coudée ainsi qu'un arbre d'entraînement (6) pour un outil, qui est monté tournant autour de son axe médian dans au moins un roulement (11, 12) côté outil, dans un corps (7) antérieur de l'instrument et est entraîné par un moteur ou une turbine, l'arbre d'entraînement (6) traversant la paroi (7a) correspondante du corps (7) par un trou (7c, 27), le roulement (11, 12), côté outil, comportant une bague de retenue (31) qui agit entre sa bague extérieure (37) et sa bague intérieure (34), est en contact avec la bague intérieure (34) par sa surface tournée vers ladite bague intérieure (34) et est fixée de manière non démontable à celle-ci, caractérisé par le fait que la bague de retenue (31a) est disposée sous la forme d'une rondelle radiale sur un manchon (31b) qui est solidaire en rotation de l'arbre d'entraînement (6), par le fait que le manchon (31b) est en contact avec la surface frontale axiale tournée vers lui de la bague intérieure (34) et par le fait que la bague extérieure (37) présente une surface d'épaulement intérieure (42) radiale, en retrait dans la direction axiale et que la bague de retenue (31a) est montée encastrée dans la bague extérieure (37).

4. Instrument médical ou dentaire selon une des revendications précédentes, caractérisé par le fait que la bague de retenue (31) est formée d'une rondelle annulaire plane.

5. Instrument médical ou dentaire selon une des revendications précédentes, caractérisé par le fait que la surface d'épaulement intérieure (42) est formée par un circlip démontable (45) qui est inséré dans une gorge intérieure (43a) et par le fait que, côté intérieur par rapport au circlip (45), une seconde bague de retenue (32) est disposée dans une gorge périphérique intérieure.

6. Instrument médical ou dentaire selon une des revendications précédentes, caractérisé par le fait que la bague de retenue (32) et la bague de retenue (31) extérieure, le cas échéant avec le manchon (31b), est ou sont en acier ou en matière plastique.

7. Instrument médical ou dentaire selon une des revendications précédentes, caractérisé par le fait que la bague de retenue (31) coopère avec la surface d'épaulement intérieure (42) pour assurer l'étanchéité.

8. Instrument médical ou dentaire selon une des revendications précédentes, caractérisé par le fait qu'à distance du premier roulement (11) du côté éloigné de l'outil est prévu un second roulement (12) pour l'arbre d'entraînement (6) qui présente une symétrie de miroir par rapport à un axe médian perpendiculaire à l'arbre d'entraînement (6).

9. Instrument médical ou dentaire selon une des revendications précédentes, caractérisé par le fait qu'un joint à labyrinthe (71) est disposé entre la paroi (7a) du corps (7) et l'arbre d'entraînement (6).

10. Instrument médical ou dentaire selon la revendication 9, caractérisé par le fait que le joint à labyrinthe (71) comprend deux disques ou anneaux à labyrinthe (72, 73), parmi lesquels l'un (72) est fixé à l'arbre d'entraînement (6).

11. Instrument médical ou dentaire selon la revendication 10, caractérisé par le fait que les disques à labyrinthe (72,73) se chevauchent dans la direction radiale et se chevauchent également dans la direction axiale par des nervures annulaires (74, 75) axiales, dirigées l'une vers l'autre, et définissent entre eux un espace radial, ou de préférence un espace (S1) en forme de S.

12. Instrument médical ou dentaire selon la revendication 10 ou 11, caractérisé par le fait que l'autre disque à labyrinthe (73) est formé d'une pièce sur la bague extérieure du roulement (11).

13. Roulement (11, 12) pour un instrument selon la revendication 1, caractérisé par le fait qu'il est agencé selon la caractéristique de la revendication 1 ou de l'une des revendications qui précèdent.
